# EUROPEAN PATENT APPLICATION

(11) **EP 1 387 587 A1**
(43) Date of publication of application: **04.02.2004**
(21) Application number: 02017153.4
(22) Date of filing: 30.07.2002
(51) Int. Cl.: H04N 7/68, H04N 7/46

(54) **Image encoder and decoder with error concealment of motion vector losses**

(71) Applicant: MATSUSHITA ELECTRIC INDUSTRIAL CO., LTD., Kadoma-shi, Osaka 571 (JP)
(72) Inventor: Schuur, Bernhard, 55130 Mainz (DE); Schlockermann, Martin, 63322 Roedermark (DE)
(74) Representative: Grünecker, Kinkeldey, Stockmair & Schwanhäusser Anwaltssozietät

(57) **Abstract**

The present invention aims to provide a more reliable error concealment in case of motion vector losses. This is accomplished by forming larger image areas during motion estimation in order to determine a common motion vector for a plurality of blocks. The determined motion factor is assigned to each of the macro blocks and transmitted accordingly. On the decoder side, motion vector data of another macro block having the same common motion vector is selected in case of a motion vector loss of the current macro block.

## Description

The present invention generally relates to methods and units for image encoding and image decoding. In particular, the present invention relates to an image encoding and decoding based on a motion estimation and motion compensation.

Motion pictures are being adopted in an increasingly number of applications ranging from a video telephony and video conferencing to DVD and digital television. When motion pictures are being transmitted, a substantial amount of data has to be sent through conventional transmission channels of a limited available frequency bandwidth. In order to transmit the digital data through the limited channel bandwidth, it is inevitable to compress or reduce the volume of the transmission data.

In order to enable inter-operability between systems designed by different manufacturers for any given application, video coding standards have been developed for comprising the amount of video data. Video coding standards are denoted with H.26x for ITU-T standards and with MPEG-x for ISO/IEC standards.

The underlying coding approach of most of the standards consist of the following main stages:
1. Dividing each video frame into blocks of pixels so that a processing of the video frame can be conducted at a block level.
2. Reducing spatial redundancies within a video frame by subjecting the video data of a block to a transformation, quantization and entropy coding.
3. Exploiting temporal dependencies between blocks of subsequent frames in order to only transmit changes between subsequent frames.

This is accomplished by employing a motion estimation and compensation technique. For any given block, a search is performed in previously coded and transmitted frames to determine a motion vector which will be used by the encoder and decoder to predict the image data of a block.

Among various video compression techniques, the so-called hybrid coding technique is known to be most effective. The hybrid coding technique combines temporal and spatial compression techniques together with a statistical coding. Most hybrid coding techniques employ a motion compensated DPCM (Differential Pulse Code Modulation), a two-dimensional DCT (Discrete Cosine Transform), a quantisation of DCT coefficients, and VLC (Variable Length Coding). The motion compensated DPCM is a process of determining the movement of an image object between a current frame and a previous frame, and predicting the current frame according to the determined motion to produce a differential signal representing the difference between the current frame and its prediction.

Specifically, in the motion compensated DPCM, current frame data is predicted from the corresponding previous frame data based on an estimation of the motion between the current and the previous frames. Such estimated motion may be described in terms of two dimensional motion vectors representing the displacement of pixels between the previous and the current frames. Generally, motion is estimated on a block basis. The motion estimation is accomplished by comparing a block in a current frame with blocks in a previous frame until a best match is determined. From the best match, an inter-frame displacement vector, indicating how much the block has moved between frames, is estimated for the whole block.

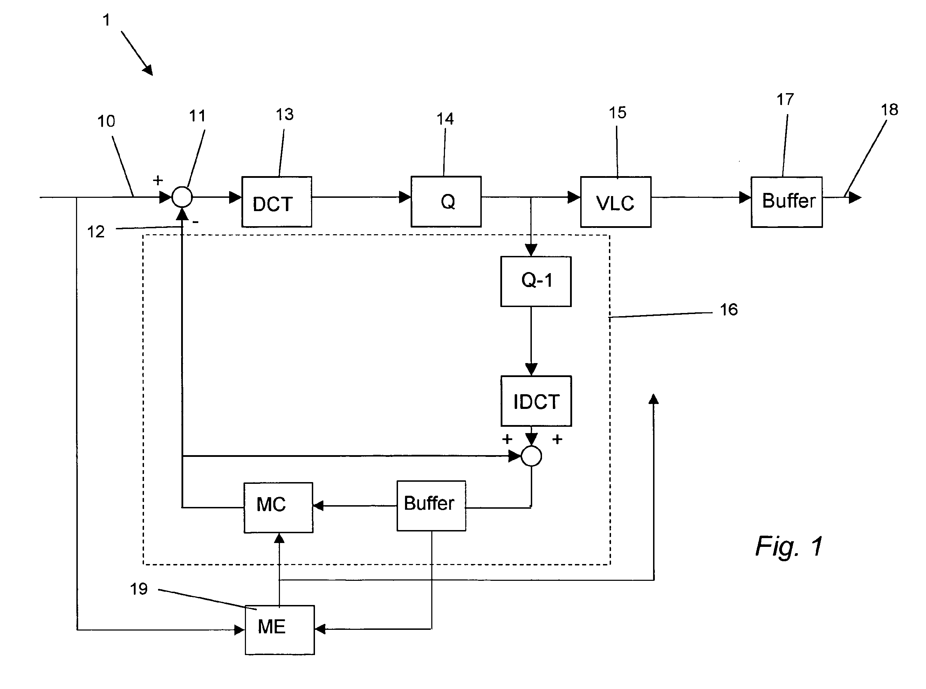

An example of a video encoder configuration is illustrated in Fig.1. The shown video encoder, generally denoted with reference numeral 1, comprises a transform unit 13 to transform the spatial image data to the frequency domain, a quantization unit 14 to quantize the transform coefficients provided by transform unit 13, a variable length coder 15 for entropy encoding the quantized transform coefficients, and a video buffer 17 for adapting the compressed video data having a variable bit rate to a transmission channel which may have a fixed bit rate.

The encoder shown in Fig. 1 employs a DPCM approach by only transmitting differences between subsequent fields or frames. These differences are obtained in subtractor 11 which receives the video data 10 to be encoded and subtracts the previous image 12 therefrom. The previous image 12 is obtained by decoding the previously encoded image (the "currently decoded image"). This is accomplished by a decoder 16 which is incorporated into video encoder 1. The decoder 16 performs the encoding steps in a reverse manner, i.e. decoder 16 comprises an inverse quantizer (Q-1), an inverse transform unit (IDCT) and an adder for adding the decoded changes to the previously decoded image to produce the previous image as it will be obtained on the decoding side.

In motion compensated DPCM, current frame or field data is predicted from the corresponding previous frame data based on an estimation of the motion between the current and the previous frames. Such estimated motion may be described in terms of two-dimensional motion vectors representing the displacement of pixels between the previous and current frames. Usually, motion estimation is performed on a block-by-block basis wherein a block in a current frame is compared with blocks in its previous frames until a best match is determined. Based on the comparation result, an inter-frame displacement vector for a whole block can be estimated for the current frame. For this purpose, a motion estimation unit ME 19 is incorporated into the encoder together with a corresponding motion compensation unit MC included into the decoding path.

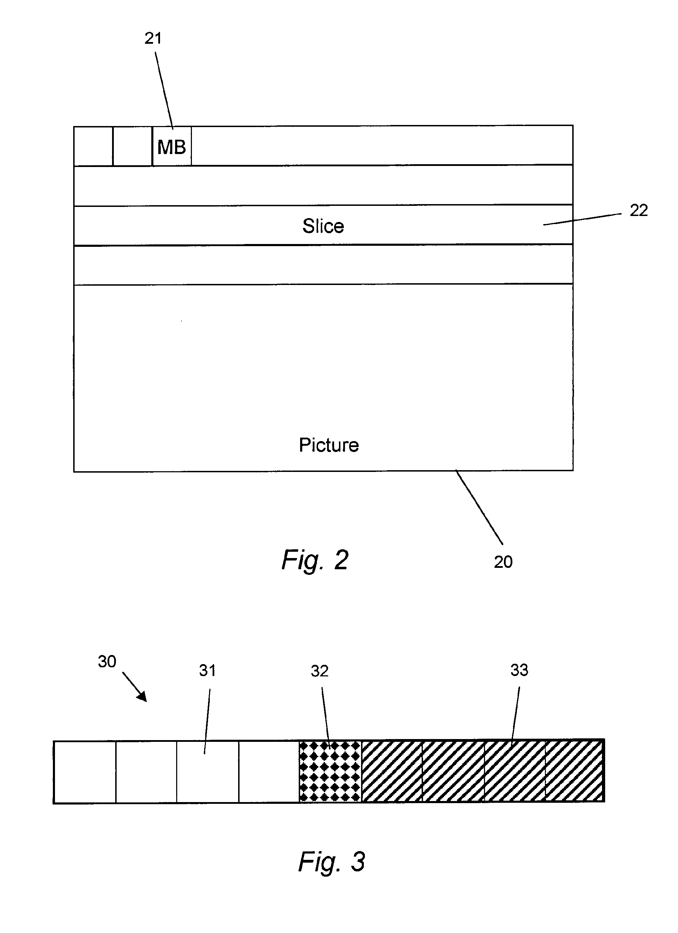

The video encoder of Fig. 1 is operated as follows. A given video image of a video signal 10 is divided into a number of small blocks, usually denoted as "macroblocks". For example, the video image 20 shown in Fig. 2 is divided into a plurality of macro blocks 21. Each of the macro blocks usually has a size of 16x16 pixels.

In addition, the picture is divided into a number of "slices" 22 which are used for resynchronization purposes in case of data losses. Each slice consists of a plurality of macro blocks, wherein the arrangement of macro blocks forming one slice is not restricted to the example shown in Fig. 2 but any other combination of macro blocks is possible.

When encoding the video data of an image by only reducing spatial redundancies within the image, the resulting frame is referred to as an I-picture. I-pictures are typically encoded by directly applying the transform to the macro blocks of a frame. Encoded I-pictures are large in size as no temporal information is exploited to reduce the amount of data.

In order to take advantage of temporal redundancies that exists between successive images, a prediction and coding between subsequent fields or frames is performed based on motion estimation and compensation. When a selected reference frame in motion estimation is a previously encoded frame, the frame to be encoded is referred to as a P-picture. In case both, a previously encoded frame and a future frame, are chosen as reference frames, the frame to be encoded is referred to as a B-picture.

According to the emerging H.26L standard currently being under development, motion compensation on each 16x16 macro block can be performed using a number of different block sizes. Individual motion vectors may be determined for blocks having 4x4, 4x8, 8x4, 8x8, 8x16, 16x8 or 16x16 pixels. The availability of small motion compensation blocks improve the ability to handle fine motion details.

Based on the result of the motion estimation operation, the motion compensation operation provides a prediction based on the determined motion vector. The information contained in a prediction error block resulting from the predicted block is then transformed into transform coefficients in transform unit 13. Generally, a two-dimensional DCT is employed. The resulting transform coefficients are quantized and finally entropy encoded (VLC) in entropy encoding unit 15.

The transmitted stream of compressed video data 18 is received by a decoder which reproduces the sequence of encoded video images based on the received data. The decoder configuration corresponds to that of decoder 16 included within the encoder of Fig. 1. A detailed description of a decoder configuration is therefore omitted.

Newer video encoding standards offer the option of having multiple reference frames for inter-picture encoding resulting in a more efficient coding of images. For this purpose, a motion estimation unit and a motion compensation unit employ a multi-frame buffer for providing several reference pictures. The motion vector is accompanied by additional information indicating the respective reference image.

The encoded video bit stream output from the variable length encoder 15 is, for instance, transported by satellite or cable transmission systems, either directly from the encoder or from a recording medium onto which the encoded video bit stream has been recorded. The probability of errors introduced during the transmission in the decoded video bit stream increases when employing wireless transmission system, in particular as wireless links are error-prone. Apart from an increasing amount data used for error protection during transmission, current video decoding systems also rely upon error concealment. In contrast to error correction, which attempts to reconstruct lost or corrupt data, error concealment aims to generate data which can substitute the lost or corrupt data. The visual effect of concealing errors perceived by a viewer should be negligible.

Referring to Fig. 3, a motion vector data loss of one macro block 32 within a slice 30 causes further data losses for those blocks 33 subsequently transmitted within the same slice 30. This is due to the differential encoding of motion vectors within a slice 30. Only motion vector data of the first macro block of a slice do not depend on previously received and decoded motion vector data.

In order to avoid visible errors in the displayed image, several error concealment techniques may be employed. A simple error concealment approach replaces the lost or corrupt data by image information from the same position of the previously decoded image. All image blocks of the currently decoded slice starting from the lost or corrupt image block have to be replaced based on the corresponding image data of the previous frame.

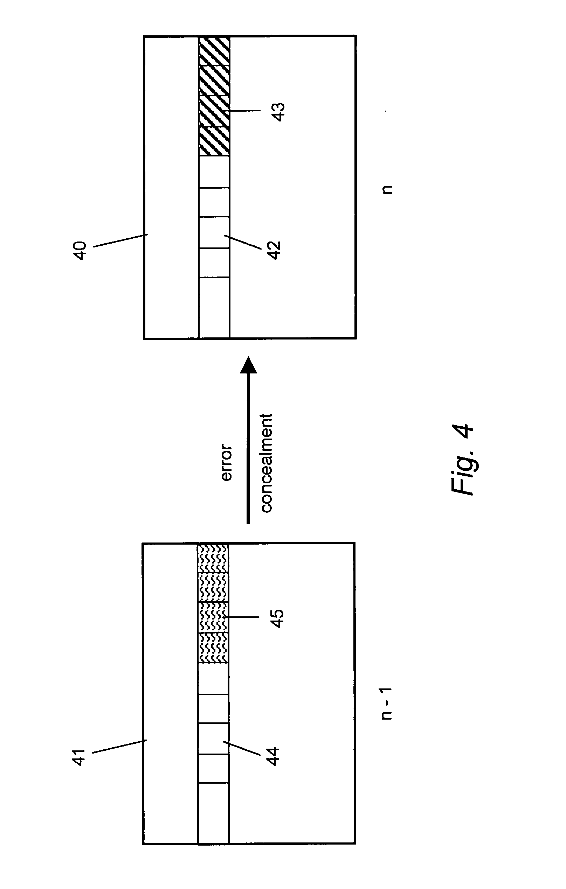

This "temporal" error concealment approach is illustrated in Fig. 4. A slice of a current frame 40 comprises correctly received macro blocks 42 and macro blocks 43 having lost or corrupt motion vector data. The temporal error concealment approach replaces the image data of macro blocks 43 by the data of a previously decoded image 41. The corresponding slice comprises macro blocks 44. Image data of macro blocks 45 at positions corresponding to those of the lost macro blocks 43 are employed for substituting the lost image data. This temporal error concealment is effective as long as there are only slight changes from frame to frame.

Temporal error concealment can be improved by estimating the lost motion vector data. This is accomplished by either selecting the motion vector of the macro block at the corresponding position in the previous frame, or by interpolating the lost motion vector based on motion vector data of macro blocks of the same frame surrounding the current macro block.

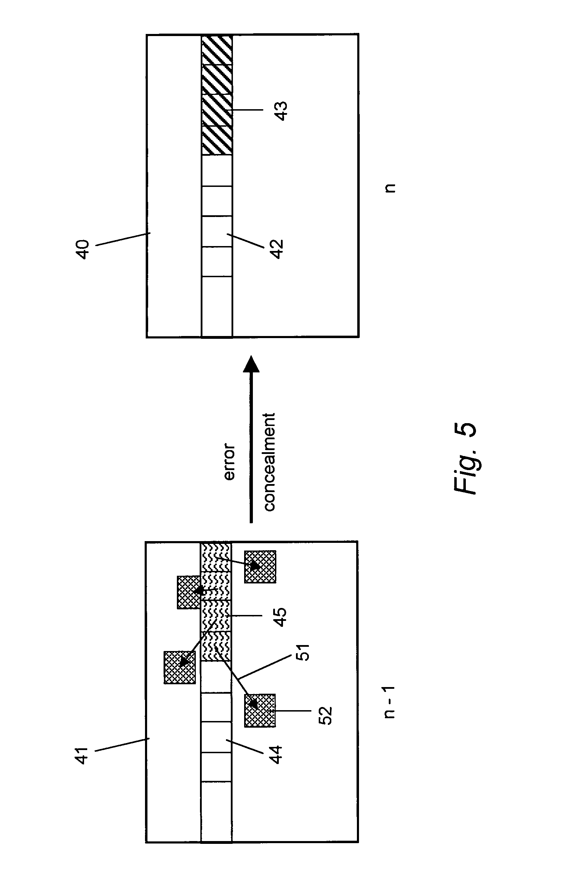

One aspect of the motion compensated error concealment approach is illustrated in Fig. 5. Lost macro blocks 43 of a current image 40 are replaced by selecting the motion vector of the macro block at the corresponding position in the previous image 41. For instance, motion vector 51 and a corresponding image area 52 are selected to generate substitute data for the first of the lost macro blocks 43 in image 40.

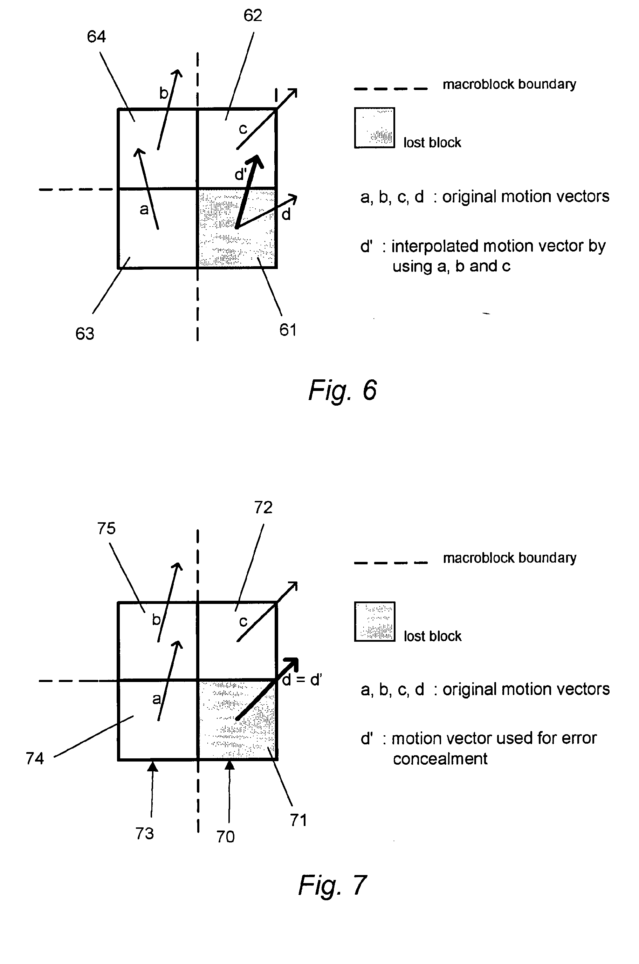

A second motion compensated error concealment approach is illustrated in Fig. 6. The current macro block 61 has been transmitted together with an original motion vector data d. Due to a data loss, motion vector d is not available for motion compensation at the decoder site. For error concealment purposes, an interpolated motion vector d' is generated based on the motion vectors a, b, c of the already decoded neighbouring macro blocks 62, 63, 64 of the same frame. As can be seen in Fig. 6, the resulting interpolated motion vector d' may considerably differ from the motion vector d originally determined during image encoding of that frame.

Accordingly, it is an object of the present invention to provide an image encoder and a decoder, an image encoding and decoding method which enabe a more reliable error concealment.

This is achieved for an image encoder by the features of claim 1, for an image encoding method by the features of claim 8, for an image decoder by the features of claim 15, and for an image decoding method by the features of claim 22.

According to a first aspect of the present invention, an image encoder for encoding image data of a sequence of images is provided. Each of the images of the image sequence being divided into a plurality of blocks. The image encoder comprises a motion estimation unit which determines a motion vector for a block of a current image with respect to a previously encoded image. The motion estimation unit being adapted to determine a common motion vector for an image area of at least two blocks of the current image. The determined motion vector is assigned to each of these blocks.

According to a second aspect, an image encoding method for encoding image data of a sequence of images is provided. The image encoding method comprises a step of dividing a current image into a plurality of blocks of image data. A motion vector for a block of the current image is determined with respect to a previously encoded image. Said step of determining a motion vector determines a common motion vector for an image area of at least two blocks of the current image. The determined motion vector is assigned to each of these blocks.

According to a third aspect of the present invention, an image decoder for decoding encoded image data of a sequence of images is provided. Each of the images of the image sequence being divided into a plurality of blocks of image data and each of the images being encoded on a block basis. The image decoder comprises an error concealment unit which determines a motion vector for the current block in case of a motion vector loss of the current block. The image decoder further comprises a motion compensation unit for predicting the image data of the current block based on the determined motion vector and a corresponding image area of a previously decoded image. The error concealment unit determines a said motion vector by selecting a motion vector of another block of an image area comprising the current block and at least the other block for determination of a common motion vector during image encoding.

According to a fourth aspect, an image decoding method for decoding encoded image data of a sequence of images is provided. Each image being divided into a plurality of blocks of image data and each of the images being encoded on a block basis. The image decoding method comprises the step of determining a motion vector for the current block in case of a motion vector loss of the current block. The image decoding method further comprises a step of predicting the image data of the current block based on the determined motion vector and a corresponding image area of a previously decoded image. The motion vector being determined by selecting a motion vector of another block of an image area comprising the current block and at least the other block for determination of a common motion vector during image encoding.

It is a particular advantage of the present invention that a motion vector loss can be corrected based on the originally determined motion vector for the current macro block. By determining a common motion vector for at least two blocks, the motion vector represents the motion of the common image area and is transmitted separately for each of the blocks. In case of a motion vector loss at the decoder site, the motion vector of the other block may be used to substitute the lost motion vector data of the current block. Thus, the present invention avoids any concealing errors and does not require any time consuming interpolation operation.

According to a preferred embodiment, the common motion vector is determined for at least two neighbouring blocks. A common image area made up from at least two neighbouring blocks does not require a complicated administration effort and does not result in a degradation of motion vector accuracy as neighbouring blocks generally relate to similar image content and have similar motion vectors.

According to another preferred embodiment, a common motion vector is determined for blocks of different slices. The macro blocks of one image are grouped in slices. The coding information of the macro blocks of one slice is transmitted differentially, i.e. the image data of one macro block can only be reconstructed based on the image data of the previously received image data of the same slice. As a loss of motion vector data within a slice results in a loss of all motion vector data of subsequent blocks, motion vector data may be recovered from a correctly received other slice. Thus, a loss of motion vector data of a single block in a slice cannot propagate to all subsequent blocks of the same slice and, consequently, a motion vector loss does not result in concealment errors perceivable by a viewer.

According to another preferred embodiment, a common motion vector is determined for neighbouring macro blocks which are part of different slices. This embodiment is easy to realize and prevents that lost or corrupt motion vector data can adversely affect the perceived image quality.

According to another preferred embodiment, a common motion vector is determined for blocks which are selected in accordance with image content information or in accordance with image coding information. As the image blocks of the common image area do not need to be adjacent to each other, any block combination from the blocks of the current image may be selected for determining a common motion vector. Based on image content information of the current image which is known beforehand, those macro blocks may be combined to a common image area which relate to a single image portion or image object (e.g. a single image background or image foreground object). Such macro blocks will have the same or similar motion vectors. Thus, the motion vector determination can be executed without adversely affecting the motion vector accuracy. In addition, the common motion vector determination makes image encoding and transmission less error-prone as motion vector losses can be corrected.

According to a preferred embodiment, the selection of particular macro blocks forming an image area for the determination of a common motion vector is based on motion vectors of one of the previously encoded images, preferably based on the previously encoded image. Macro blocks which have a similar motion vector in a previous images will also have similar motion vectors in the current image. Thus, image areas for the determination of a common motion vector may be formed on the basis of the similarity between the motion vectors of a previous image. Thus, the previously determined motion vectors represent one possible selection criterion for forming image areas appropriate for determination of a common motion vector.

When combining more than two blocks for forming an image area for determining a common motion vector, the image encoding and transmission procedure can be made even less error-prone. The more blocks of a current image have the same common motion vector, the more motion data losses with the current image can be corrected. For instance, when combining blocks of a plurality of different slices, a simultaneous motion vector data loss may occur in more than one slice without affecting the perceived image quality as the data losses in all the slices can be corrected.

It is an important aspect of the present invention that a common motion vector is not determined based on the image encoding block unit size, but on a larger image area. Thus, data losses on the encoding block unit size do not cause a corresponding motion data loss and a corresponding image quality degradation as the may be corrected in accordance with the present invention.

Further preferred embodiments of the present invention are the subject-matter of dependent claims.

The above and other objects and features of the present invention will become apparent from the following description and preferred embodiments given in conjunction with the accompanying drawings, in which:
- FIG.1: illustrates a block diagram of a motion compensated DPCM video encoder;
- FIG.2: illustrates a sub-division of a video image for image encoding and decoding purposes;
- FIG. 3: illustrates a slice of a received image including a motion vector data loss of one of the macro blocks and the data loss propagation;
- FIG. 4: illustrates the approach employed in temporal error concealment;
- FIG. 5: illustrates one of the approaches employed in motion compensated error concealment;
- FIG.6: illustrates a motion vector interpolation approach of the motion compensated error concealment technique;
- FIG. 7: illustrates an example of the basic concept underlying the present invention;
- FIG. 8: illustrates examples for a common motion estimation for larger image areas consisting of a plurality of macro blocks organized in a regular horizontal slice structure;
- FIG. 9: illustrates other examples for a common motion estimation for larger image areas which consist of a plurality of macro blocks organized in an arbitrary slice structure;
- FIG. 10: illustrates an example for a common motion estimation wherein the larger image area comprises macro blocks of a plurality of different slices.

The present invention aims to facilitate a recovery of lost motion vectors. This is accomplished by performing a motion estimation at the encoder side for an image area consisting of at least two of the macro blocks of the current image. As the determined common motion vector is assigned to each of the macro blocks and transmitted individually, a decoder can recover the correct motion vector data even in case of lost motion vector data for one of the macro blocks.

The general concept of the present invention will now be explained with reference to Fig. 6 and Fig. 7. Both figures show four neighbouring macro blocks from all macro blocks of a current image. The macro blocks of Fig. 6 which illustrates a conventional motion estimation approach, are denoted as 61, 62, 63 and 64. Fig. 7 relates to the same macro blocks, denoted 71, 72, 74, 75, but illustrates the motion estimation approach of the present invention.

Referring to Fig. 6, an individual motion vector a, b, c, d has been determined for each of the macro blocks 61, 62, 63, 64. Due to image content differences, these motion vectors differ slightly from each other. In case of a loss of the motion vector data of macro block 61, the lost data can be reconstructed on the basis of the motion vector data a, b, c of the neighbouring macro blocks 62, 63, 64. A motion vector interpolation of motion vectors a, b, c would result in a motion vector d' which may differ considerably from the originally estimated motion vector d on the encoder side.

Such a deviation between original motion vector d and the interpolated motion vector d' causes a concealment error which might be perceived by a viewer as image degradation. In order to avoid such image degradation, the present invention proposes to perform motion estimation on an enlarged image area basis. As can be seen in Fig. 7, the encoding procedure is carried out on a macro block basis which are denoted by reference numerals 71, 72, 74 and 75. In contrast to the motion estimation approach illustrated in Fig. 6, two neighbouring macro blocks are combined to a larger image area for motion estimation purposes. Specifically, macro blocks 71 and 72 are combined to a larger image area 70 for motion estimation. Correspondingly, macro blocks 74 and 75 are combined to a larger image area 73. On the basis of these larger image areas 70 and 73, motion estimation is performed and combined motion vectors a, b and c, d are determined. Thus, motion vectors c and d of macro blocks 71 and 72 of image area 70 are identical to each other, and in a similar manner motion vectors a and b of macro blocks 74 and 75 of image area 73 are identical to each other. The identical motion vectors are assigned to each of the macro blocks and transmitted individually. Thus, the further encoding procedure is not affected by a motion estimation improved in accordance with the present invention.

If a motion vector loss is detected on the decoder side, a conventional motion compensation is not possible. In accordance with the present invention, the motion vector loss of macro block 71 is corrected by referring to the motion vector data of the other macro block 72 of the combined image area 70. Thus, lost motion vector d can be replaced by the identical motion vector c being new motion vector d'. As the lost or corrupt motion vector data of a single macro block can be reliably corrected, a propagation of the motion vector loss in case of a differential encoding of motion vector data, as described in connection with Fig. 3 for a conventional image encoding and decoding procedure, can be efficiently prevented.

The arrangement of a larger image area for motion estimation as shown in Fig. 7 only represents a particular example of the present invention. As those skilled in the art will appreciate, every other combination of macro blocks may be implemented to the same effect. The following examples only serve to illustrate possible variations.

By increasing the number of macro blocks forming an image area for the estimation of a common motion vector, the number of alternative motion vectors which may used for reconstructing lost motion vector data is increased. In this manner, the present invention may be used to adapt image encoding/decoding to error-prone transmission channels, in particular for data transmissions over wireless links. Even in case of multiple motion vector losses, there still remains a reliable motion vector which can be used for reconstructing the lost motion vectors.

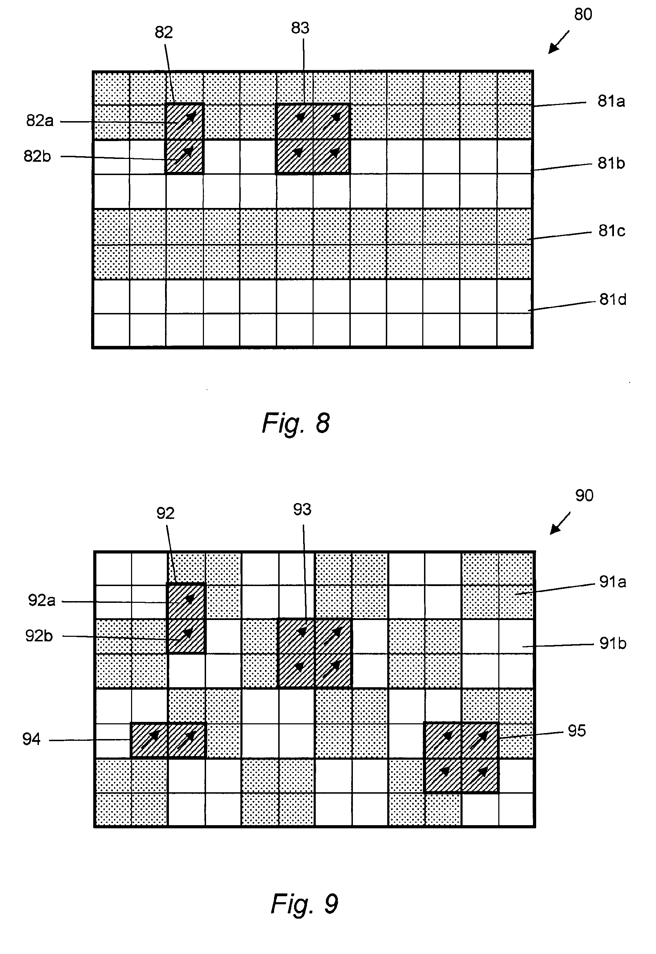

Figs. 8 to 10 illustrate examples for forming image areas for motion estimation purposes. Although all examples use neighbouring macro blocks, the present invention is not limited to such configurations of larger image areas for a common motion estimation. As those skilled in the art will appreciate, any combination of macro blocks may be used, for instance macro blocks which are individually distributed over the current frame.

Referring to Fig. 8, a current image 80 is divided into a plurality of macro blocks. The macro blocks are assigned to different slices 81a, 81b, 81c, 81d and processed separately for each of the slices. In particular, motion vector data determined for each of the macro blocks is transmitted for each of the slices differentially, i.e. only the motion vector data of the first macro block is transmitted as determined and differences between motion vector data of subsequent macro blocks are transmitted for those macro blocks following the first one. When forming an image are for motion estimation which combines macro blocks of different slices, image degradation may be efficiently prevented as it is unlikely that motion data of different slices gets lost simultaneously.

As shown in Fig. 8, an image area 82 is formed by combining two neighbouring blocks 82a, 82b of different slices 81a, 81b. Alternatively, a larger image area 83 may be formed by combining a plurality of blocks from both neighbouring slices. The macro blocks of each of the image areas 82, 83 will have the same motion vectors (indicated by the corresponding orientation of arrows shown within each macro block of the enlarged image areas 82, 83).

Fig. 8 only shows two image areas used for a common motion estimation as an example for possible combinations of macro blocks. As those skilled in the art will appreciate, motion estimation may be performed for all block of an image based on larger image areas resulting from a respective combination with another macro block.

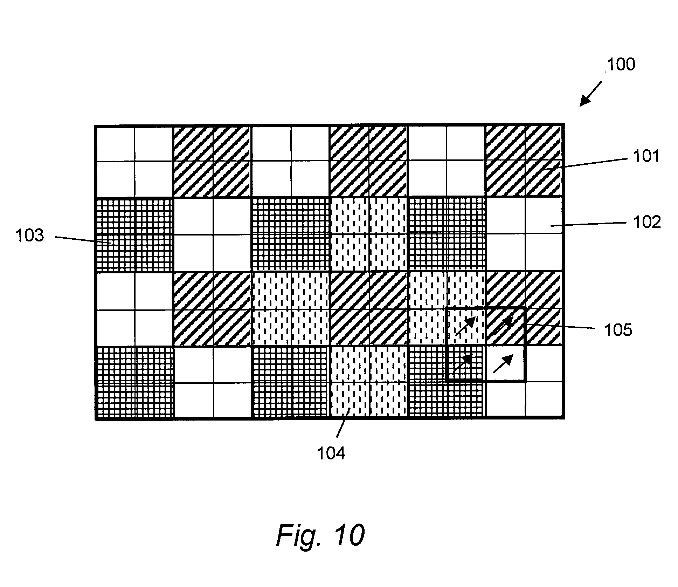

Some video coding systems allow different kinds of slice structures. For instance, the H.26L standard currently being developed allows any macro blocks of one image to be assigned to a particular slice. Fig. 9 and Fig. 10 show arbitrary slice configurations. According to Fig. 9, an image 90 is split up into a plurality of slices 91a, 91b, ... each of which consisting of four neighbouring macro blocks. For motion estimation, an image area 92, 93, 94 may be formed by combining macro blocks of neighbouring slices in different manners. In particular, image area 92 consists of macro blocks 92a, 92b, both being assigned to different slices.

Fig. 10 illustrates a slice configuration consisting of four different slices 101, 102, 103, 104 each of which consisting of equal portions of four neighbouring macro blocks spread all over the image 100. As indicated by reference numerals 105 (and 95 in Fig. 9), an image area for motion vector estimation may be formed by a combination of macro blocks from four different slices in accordance with an alternative embodiment. As can be seen in Fig. 10, the image area 105 comprises macro blocks from all of the slices 101, 102, 103 and 104. Only one of these four neighbouring macro blocks needs to be transmitted error free in order to allow a correct decoding of the motion vectors of all of the blocks of image area 105. Thus, even a simultaneous loss of three motion vectors may be corrected reliably.

Preferably the macro blocks described in the above examples have a size of 8x8 pixels. The resulting image areas of the above examples will then have a size of 16x8 or 16x16 pixels. As those skilled in the art will appreciate, the present invention is not limited to any particular size of macro blocks.

In summary, the present invention aims to provide a more reliable error concealment in case of motion vector losses. This is accomplished by forming larger image areas during motion estimation in order to determine a common motion vector for a plurality of macro blocks. The determined motion factor is assigned to each of the macro blocks and transmitted accordingly. On the decoder side, motion vector data of another macro block having the same common motion vector is selected in case of a motion vector loss of the current macro block.

## Claims

1. An image encoder for encoding image data of a sequence of images, each of said images being divided into a plurality of a blocks, comprising:
a motion estimation unit (19) for determining a motion vector (d) for a block of a current image with respect to a previously encoded image.
**characterized in that**
said motion estimation unit (19) being adapted to determine a common motion vector (c, d) for an image area (70) of at least two blocks (71, 72) of the current image, wherein the determined motion vector (c, d) is assigned to each of the blocks (71, 72) of the image area (70).

2. An image encoder according to claim 1 wherein the common motion vector (c, d) is a determined for neighbouring blocks (71, 72).

3. An image encoder according to claim 1 or 2, wherein the common motion vector is determined for blocks (82a, 82b) of different slices (81a, 81b), each slice (81 a, 81 b) comprising blocks of differentially encoded motion vectors.

4. An image encoder according to any of claims 1 to 3, wherein the common motion vector is determined for blocks which are combined to the image area in accordance with image content information or in accordance with image coding information.

5. An image encoder according to claim 4, wherein the common motion vector is determined for blocks which are combined to the image area in accordance with motion vectors of a previous image.

6. An image encoder according to claim 5, wherein the common motion vector is determined for blocks which are combined to the image area in accordance with motion vectors of the previous image.

7. An image encoder according to any of claims 1 to 6, further comprising:
a motion compensation unit (MC) for predicting image data of the current block based on the determined motion vector and a corresponding image area of a previously encoded image,
prediction error determining means (11) for determining a prediction error of the current block based on the image data of the current block and the predicted image data for the current block, and
encoding means (13, 14) for encoding the prediction error of the current block.

8. An image encoding method for encoding image data of a sequence of images, comprising the steps of:
dividing a current image into a plurality of blocks (71, 72, 74, 75) of image data, and
determining a motion vector (d) for a block (71) of the current image with respect to a previously encoded image
**characterized in that**
said step of determining a motion vector determines a common motion vector (c, d) for an image area (70) of at least two blocks (71, 72) of the current image, wherein the determined motion vector (c, d) is assigned to each of the blocks (71, 72) of the image area (70).

9. An image encoding method according to claim 8, wherein the common motion vector (c, d) is determined for neighbouring blocks (71, 72).

10. An image encoding method according to claim 8 or 9, wherein the common motion vector is determined for blocks (82a, 82b) of different slices (81a, 81 b), each slice (81 a, 81 b) comprising blocks of differentially encoded motion vectors.

11. An image encoding method according to any of claims 8 to 10, wherein the common motion vector is determined for blocks which are combined to the image area in accordance with image content information or in accordance with image coding information.

12. An image encoding method according to claim 11, wherein the common motion vector is determined for blocks combined to the image area in accordance with motion vectors of a previous image.

13. An image encoding method according to claim 12, wherein the common motion vector is determined for blocks which are combined to the image area in accordance with motion vectors of the previous image.

14. An image encoding method according to any of claims 8 to 13, further comprising the steps of:
predicting image data of the current block (71) based on the determined motion vector (d) and a corresponding image area of a previously encoded image,
determining a prediction error of the current block (71) based on the image data of the current block (71) and the predicted image data for the current block (71), and
encoding the prediction error of the current block (71).

15. An image decoder for decoding encoded image data of a sequence of images, each of said images being divided into a plurality of blocks of image data and each of the images being encoded on a block basis, comprising:
an error concealment unit for determining a motion vector (d') for the current block (71) in case of a motion vector loss of the current block (71), and
a motion compensation unit for predicting the image data of the current block (71) based on the determined motion vector (d') and a corresponding image area of a previously decoded image
**characterized in that**
said error concealment unit being adapted to determine said motion vector (d') by selecting a motion vector (c) of another block (72) of an image area (70) comprising the current block (71) and at least the other block (72) for determination of a common motion vector (c, d) during image encoding.

16. An image decoder according to claim 15, wherein the common motion vector (c, d) has been determined for neighbouring blocks (71, 72) during image encoding and the motion vector (c) of the neighbouring block (72) is selected.

17. An image decoder according to claims 15 or 16, wherein the common motion vector (c, d) has been determined for blocks (82a, 82b) of different slices (81a, 81b), each slice (81a, 81b) comprising blocks of differentially encoded motion vectors, and the motion vector of the block (82a, 82b) of the other slice (81 a, 81b) is selected.

18. An image decoder according to any of claims 15 to 17, wherein the common motion vector has been determined for blocks of the current image which are combined to the image area in accordance with image content information or in accordance with image coding information, and the motion vector of another block having the common motion vector is selected.

19. An image decoder according to claim 18, wherein the common motion vector has been determined for blocks of the current image which are combined to the image area in accordance with motion vectors of a previously encoded image.

20. An image decoder according to claim 19, wherein the common motion vector has been determined for blocks which are combined to the image area in accordance with motion vectors of the previous image.

21. An image decoder according to any of claims 15 to 20, further comprising:
prediction error decoding means for decoding an encoded prediction error of the current block (71), and
image forming means for combining the predicted image data with said decoded prediction error.

22. An image decoding method for decoding encoded image data of a sequence of images, each image being divided into a plurality of blocks of image data and each of the images being encoded on a block basis, the method comprising the steps of:
determining a motion vector (d') for the current block (71) in case of a motion vector loss of the current block (71), and
predicting the image data of the current block (71) based on the determined motion vector (d') and a corresponding image area of a previously decoded image
**characterized in that**
said motion vector (d') being determined by selecting a motion vector (c) of another block (72) of an image area (70) comprising the current block (71) and at least the other block (72) for determination of a common motion vector (c, d) during image encoding.

23. An image decoding method according to claim 22, wherein the common motion vector has been determined for neighbouring blocks (71, 72) during image encoding, and the motion vector (c) of the neighbouring block (72) is selected.

24. An image decoding method according to claim 22 or 23, wherein the common motion vector has been determined for blocks (82a, 82b) of different slices (81a, 81b), each slice (81a, 81b) comprising blocks of differentially encoded motion vectors, and the motion vector of the block (82a, 82b) of the other slice (81 a, 81 b) is selected.

25. An image decoding method according to any of claims 22 to 24, wherein the common motion vector has been determined for blocks of the current image which are combined to the image area in accordance with image content information or in accordance with image coding information, and the motion vector of another block having the common motion vector is selected.

26. An image decoding method according to claim 25, wherein the common motion vector has been determined for blocks of the current image which are combined to the image area in accordance with motion vectors of a previously decoded image.

27. An image decoding method according to claim 26, wherein the common motion vector has been determined for blocks which are combined to the image area in accordance with motion vectors of the previous image.

28. An image decoding method according to any of claims 22 to 27, further comprising the steps of:
decoding an encoded prediction error of the current block (71), and
combining the predicted image data with said decoded prediction error.

29. An image coding system comprising an image encoder in accordance with claim 1 and an image decoder in accordance with claim 15.

30. An image coding system in accordance with claim 29, wherein the encoded image data is transmitted from the image encoder to the image decoder over a wireless link.
